# EUROPEAN PATENT SPECIFICATION

(11) **EP 3 833 100 B1**
(45) Date of publication and mention of the grant of the patent: **04.10.2023**
(21) Application number: 19843849.1
(22) Date of filing: 01.08.2019
(51) Int. Cl.: H04W 36/00, H04W 36/30

(54) **CONTROL METHOD FOR USER EQUIPMENT, AND USER EQUIPMENT**
STEUERUNGSVERFAHREN FÜR BENUTZERGERÄT SOWIE BENUTZERGERÄT
PROCÉDÉ DE COMMANDE POUR UN ÉQUIPEMENT UTILISATEUR ET ÉQUIPEMENT UTILISATEUR

(30) Priority: 01.08.2018 CN 201810867644
(43) Date of publication of application: 09.06.2021
(73) Proprietor: Sharp Kabushiki Kaisha, Sakai-City, Osaka 590-8522 (JP); FG Innovation Company Limited, Tuen Mun, New Territories (HK)
(72) Inventor: CHANG, Ningjuan, Shanghai 201206 (CN); LIU, Renmao, Shanghai 201206 (CN); TSUBOI, Hidekazu, Sakai City, Osaka 590-8522 (JP)
(74) Representative: Müller Hoffmann & Partner
(86) International application number: PCT/CN2019/098848
(87) International publication number: WO 2020/025022

(56) References cited:
- WO-A1-2020/162704
- CN-A- 106 537 882
- CN-A- 106 537 971
- US-A1- 2016 285 679
- US-A1- 2018 184 362
- SAMSUNG ET AL: "The Necessity of T312 in NR", 3GPP DRAFT; R2-1810481 THE NECESSITY OF T312 IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Montreal, Canada; 20180702 - 20180706 1 July 2018 (2018-07-01), XP051467642, Retrieved from the Internet: URL:http://www.3gpp.org/ftp/Meetings%5F3GP P%5FSYNC/RAN2/Docs [retrieved on 2018-07-01]
- CATT: "RLM related timers and constants combination (RILNo C012)", 3GPP DRAFT; R2-1800147 RLM RELATED TIMERS AND CONSTANTS COMBINATION(RILNO C012), 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Vancouver, Canada; 20180122 - 20180126 16 January 2018 (2018-01-16), XP051386921, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-16]
- NTT DOCOMO, INC.: "Remaining issues on radio link monitoring for mobility ma- nagement", 3GPP Draft; R1-1800656_Discussion on NR RLM and RLF_final, vol. RAN WG1, 13 January 2018 (2018-01-13) , pages 1-5, XP051384978, Vancouver, Canada
- Qualcomm Incorporated: "SCG change failure in EN-DC", 3GPP Draft; R2-1713899 EN-DC SCG change failure, vol. RAN WG2, 17 November 2017 (2017-11-17), pages 1-3, XP051372534, Reno, USA

## Description

### Technical Field

The present disclosure relates to the technical field of wireless communications. More specifically, the present disclosure relates to a control method for user equipment and user equipment.

### Background

A new research project on 5G technical standards (see non-patent literature: RP-181433: New WID on NR (New Radio) mobility enhancements) was approved in the 3rd Generation Partnership Project (3GPP) RAN#80 plenary session held in June 2018. One of the research objectives of this project is to meet one of the mobility requirements in NR: seamless handover, namely, to achieve a handover interruption time period of 0 millisecond in a cell handover procedure. Solutions under research for shortening a handover interruption time period include a solution referred to as fast handover failure recovery. That is, during a handover procedure, a radio link connection between user equipment (UE) and a network-side base station can quickly recover from a failed handover or a handover predicted to fail.

Research on a fast handover failure recovery solution in an NR system will be carried out based on a fast handover failure recovery solution in a Long Term Evolution (LTE) system. The present disclosure provides solutions related to implementing a fast handover failure recovery technology in the NR system.

SAMSUNG ET AL: "The Necessity of T312 in NR", 3GPP DRAFT; R2-1810481, discusses the issues with respect to Fast RLF recovery in LTE and Necessity of fast RLF recovery in NR.

CATT:"RLM related timers and constants combination (RILNo C012)", 3GPP DRAFT; R2-1800147, discusses the combination of T310 and T313, N310 and N313 N311 and N314, and the following proposals are made: (1) Due to spCellConfig is unified for MCG and SCG configuration, the T310 and T313 should be combined to one timer T310. The UE keeps T310 at the cell group from which the timer is received, (2) The RLM constant of N310 and N313, N311 and N314 should be combined to N310 and N311. UE keeps N310 and N311 at the cell group from which the constants are received, and (3) Network can configure different T310 and N310 N311 for MCG and each SCG in NR.

US2018/184362A1 discloses a wireless device receives from a first base station, configuration parameters of a plurality of cells. The configuration parameters comprise a first cell group comprising one or more first cells for communication with the first base station, and a second cell group comprising a licensed assisted access (LAA) cell for communication with a second base station. The wireless device receives from the second base station LAA cell signals in a subframe of a plurality of subframes of the LAA cell. The wireless device determines whether the subframe is considered for radio link failure (RLF) detection based on processing the LAA cell signals. The wireless device increments a counter in response to the subframe of the LAA cell being considered for RLF detection, and the wireless device not successfully decoding a control channel in the subframe of the LAA cell. The wireless device detects an RLF based on the counter.

### Summary

The objective of the present disclosure is to provide solutions related to implementing a fast handover failure recovery technology in an NR system. More specifically, the present disclosure provides solutions related to managing, in the NR system, a timer used to implement the fast handover failure recovery technology. The present disclosure provides a control method for user equipment and user equipment.

The problem is solved by the teachings of the independent claim. Further embodiments are defined in the dependent claims. The invention is defined by the appended claims. References to embodiments which do not fall under the scope of the claims are to be understood as examples useful for understanding the invention.

A control method executed in user equipment (LTE) is provided, the control method comprising: receiving, by the LTE, a radio resource control (RRC) reconfiguration message from a base station; and if the RRC reconfiguration message comprises radio link monitoring configuration information, if a fast handover failure recovery timer is running, stopping the fast handover failure recovery timer.

In the above control method, the fast handover failure recovery timer is a timer T312, and the timer T312 is a timer associated with a measurement configuration corresponding to a cell group, wherein the cell group comprises a master cell group (MCG) and a secondary cell group (SCG).

In the above control method, the radio link monitoring configuration information is an information element rlf-TimerAndConstants. If the received information element rlf-TimerAndConstants is set to "release," the configuration of the fast handover failure recovery timer is released. If the received information element rlf-TimerAndConstants is not set to "release," the configuration of the fast handover failure recovery timer is reconfigured according to the received configuration content.

In the above control method, the configuration of the fast handover failure recovery timer refers to a value of the fast handover failure recovery timer and/or an indication configuration indicating whether one or a plurality of measurement identifications (IDs)s can use the fast handover failure recovery timer.

In the above control method, the radio link monitoring configuration information is used for reconfiguration of a reference signal(s) for radio link monitoring (RLM), and the UE reconfigures, on the basis of the received radio link monitoring configuration information, a reference signal(s) used for radio link monitoring.

In the above control method, the UE starts the timer T312 when at least one of the following conditions is met: condition 1, for a measurement ID, if a trigger type is set to "event," and all measurements of one or a plurality of applicable cells having been filtered by a layer 3 have met, within a time period timetoTrigger, an entry condition applied to the event, and a measurement report list VarMeasReportList stored in the UE does not comprise any measurement report item for the measurement ID, and if the UE supports the timer T312 and the configuration for the event comprises a configuration indicating that the timer T312 is available, a timer T310 is running, and a secondary cell group (SCG) is not configured or one or a plurality of timers T313 are running and the timer T312 is not running, then the timer T312 is started; condition 2, for a measurement ID, if a trigger type is set to "event," and all measurements of one or a plurality of applicable cells not comprised in a triggered cell list cellsTriggeredList having been filtered by the layer 3 have met, within the time period timetoTrigger, an entry condition applied to the event, and if the UE supports the timer T312 and the configuration for the event comprises a configuration indicating that the timer T312 is available, the timer T310 is running, and a secondary cell group (SCG) is not configured or one or a plurality of timers T313 are running and the timer T312 is not running, then the timer T312 is started; condition 3, for a measurement ID, if a trigger type is set to "event," if all measurements of one or a plurality of applicable cells comprised in the triggered cell list cellsTriggeredList having been filtered by the layer 3 have met, within the time period timetoTrigger, a leaving condition applied to the event, and if the UE supports the timer T312 and the configuration for the event comprises a configuration indicating that the timer T312 is available, the timer T310 is running, and a secondary cell group (SCG) is not configured or one or a plurality of timers T313 are running and the timer T312 is not running, then the timer T312 is started, wherein the timer T310 is a timer used for MCG radio link failure detection, and the timer T313 is a timer used for SCG radio link failure detection.

Another control method executed in user equipment (UE) is provided, the control method comprising: causing the UE and a base station to communicate with each other through dual connectivity (DC) based on a master cell group (MCG) and a secondary cell group (SCG); and if the UE detects an MCG failure or if the UE initiates a procedure for transmitting an MCG failure information message, if a fast handover failure recovery timer is running, stopping the fast handover failure recovery timer.

In the above control method, the fast handover failure recovery timer is a timer T312, and the MCG failure comprises the following: a radio link failure (RLF) occurs in the MCG; an RRC configuration of the MCG fails; integrity monitoring for the MCG fails; a maximum uplink transmission timing difference is exceeded.

According to the invention, a user equipment (UE) is provided, as defined in Claim 1, and a corresponding method is provided, as defined in Claim 4.

### Brief Description of the Drawings

In order to understand the present disclosure and advantages thereof more fully, reference will now be made to the following description made in conjunction with the accompanying drawings.
FIG. 1 shows a handover procedure in an LTE/NR system;
FIG. 2 shows an example of a timing relationship between timing of a timer T310 and a handover command;
FIG. 3 shows a flowchart of a control method 100 for user equipment (UE) according to an embodiment of the present disclosure;
FIG. 4 shows a flowchart of a control method 200 for user equipment (UE) according to an embodiment of the present disclosure; and
FIG. 5 shows a block diagram of user equipment 300 according to an embodiment of the present disclosure.

In the drawings, identical or similar structures are marked by identical or similar reference numerals.

### Detailed Description

According to the following detailed description of exemplary embodiments of the present disclosure made in conjunction with the accompanying drawings, other aspects, advantages, and prominent features of the present disclosure will become apparent to those skilled in the art.

In the present disclosure, the terms "include" and "comprise" and derivatives thereof mean inclusion without limitation; the term "or" may have an inclusive meaning and means "and/or."

A plurality of embodiments according to the present disclosure are specifically described below by using an LTE/NR mobile communication system and subsequent evolved versions thereof as an exemplary application environment. However, it is to be noted that the present disclosure is not limited to the following embodiments, but may be applied to other wireless communications systems. In the present disclosure, unless otherwise specified, the concept of a cell and the concept of a base station are interchangeable. An LTE system may also refer to a 5G LTE system and a post-5G LTE system (such as an LTE system referred to as an eLTE system or an LTE system that can be connected to a 5G core network). In

The program running on the device according to the present disclosure may be a program that enables a computer to implement the functions of the embodiments of the present disclosure by controlling a central processing unit (CPU). The program or information processed by the program can be stored temporarily in a volatile memory (e.g., Random Access Memory (RAM)), a Hard Disk Drive (HDD), a non-volatile memory (e.g., flash memory), or other memory systems.

The program for implementing the functions of the embodiments of the present disclosure may be recorded on a computer-readable recording medium. The corresponding functions can be achieved by reading programs recorded on the recording medium and executing these programs by the computer system. The so-called "computer system" may be a computer system embedded in the device, which may include operating systems or hardware (e.g., peripherals). The "computer-readable recording medium" may be a semiconductor addition, the LTE can be replaced with an evolved universal terrestrial radio access network (E-UTRAN) or an evolved universal terrestrial radio access (E-UTRA).

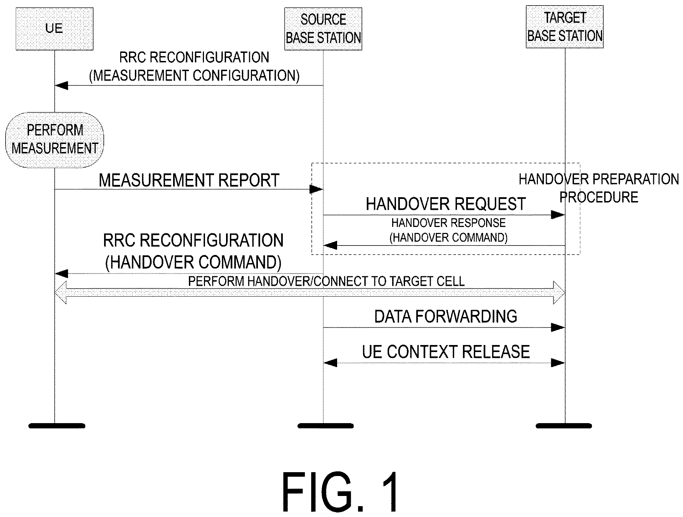

Firstly, a handover procedure in an LTE/NR system is briefly described. FIG. 1 shows the handover procedure in the LTE/NR system. As shown in FIG. 1, a serving base station (also referred to as a source base station during handover) of UE triggers radio resource management measurement of the UE by transmitting a measurement configuration to the UE. Measurement used for the purpose of handover generally has a trigger type configured to be an event. When a measurement result of measurement performed by the UE on a measurement object (such as a measured target carrier frequency or a measured serving cell/neighboring cell) meets a threshold for measurement reporting for longer than a certain time period, the UE triggers the measurement reporting, and transmits a measurement report to the base station. After receiving the measurement report, the base station evaluates the measurement result in the measurement report, and if the base station considers that a handover is needed, then the base station selects a target base station to initiate a handover preparation procedure. After completion of the handover preparation procedure, the target base station generates RRC reconfiguration messages including in-synchronization reconfiguration Reconfigurationwithsync or mobility control information MobilityControlInformation, and delivers the same to the UE through the source base station. After receiving the RRC reconfiguration messages, the UE starts to perform handover, and is synchronized with the target base station. When the UE is successfully connected to the target base station through a random access procedure, the UE considers that the handover procedure is successfully completed.

In the above procedure, the "certain time period" is configured by a network side, and is referred to as trigger time TimeToTigger.

It should be noted that in the present disclosure, the above RRC reconfiguration messages including an information element of in-synchronization reconfiguration Reconfigurationwithsync or an information element of mobility control information MobilityControlInfo are collectively referred to as a handover command, and the handover command is used to trigger the UE to perform network side-controlled mobility. The information element of in-synchronization reconfiguration or the information element of mobility control information includes configuration information of the target base station, and is used to configure mobility information, such as the configuration information of the target base station, to the UE during the network side-controlled mobility. In the present disclosure, the handover generally refers to a handover controlled by a network layer or the UE, cell change, an intra-cell handover used for security update, etc. performed in an RRC connected state.

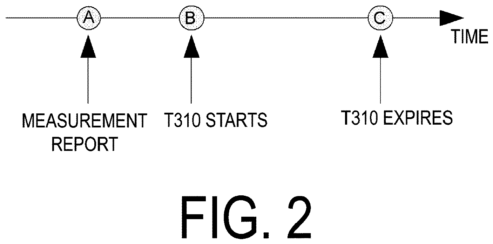

Secondly, a fast handover failure recovery mechanism in the LTE is described. A research on mobility enhancements of LTE Release 12 shows that one of the main reasons for a handover failure is that a radio link failure (RLF) occurs before the UE can receive any handover command in time after transmitting the measurement report. For example, FIG. 2 shows an example of a timing relationship between timing of a timer T310 and a handover command. As shown in FIG. 2, the UE triggers a measurement report used for handover at a time point A. At a time point B, the UE receives N310 consecutive out-of-sync indications from a physical layer, and starts the timer T310. When the T310 expires at a time point C, if the UE has not received any handover command, then the UE considers that an RLF occurs, and triggers an RRC re-establishment procedure to recover an RRC connection. This means that in this handover failure procedure, a service interruption time period of the UE is at least the time length of the T310. When the T310 is running, downlink quality of the UE is extremely poor. It is generally believed that the UE cannot receive any handover command in this case, and waiting for a handover command during the entire operation time period of the T310 is not beneficial. In order to reduce the service interruption time period in this case, an early expiry mechanism for T310 is introduced to the LTE system, that is, a timer T312 is introduced. The operation of the T312 reduces the service interruption time period during the handover, so that the UE can quickly trigger an RRC connection re-establishment procedure to recover an RRC connection between the UE and the network side, thereby achieving fast handover failure recovery.

The above T310 is defined in the LTE/NR system, and is used for radio link failure detection. Specifically, when a physical layer problem of a primary cell Pcell is detected, namely, when N310 consecutive out-of-sync indications are received from a lower layer, the T310 is started. When N311 in-sync indications from the lower layer for the primary cell Pcell are received, or when the handover procedure is triggered, or when the RRC connection re-establishment procedure is initiated, the timer T310 is stopped. If the T310 expires, and if security has not been activated, then the UE leaves the RRC connected state and enters into an RRC idle state; or otherwise, if the security has been activated, then the RRC connection re-establishment procedure is triggered.

N310/N311 are constants, and are configured by the network side. If the network side does not configure the constants, then the UE uses a predefined default value.

In a current LTE technical specification protocol, as described above, the T312 is used for radio link failure detection when the measurement report used for handover is triggered. Generally, the value is set to be a value less than the T310 so as to achieve fast radio link failure detection and fast handover failure recovery. When a measurement report is triggered for a measurement ID configured with the T312, and when the T310 is running, the T312 is started. When the N311 consecutive in-sync indications from the lower layer are received, or when the UE initiates the handover procedure, or when the UE initiates the RRC connection re-establishment procedure, or when the T310 expires, the running T312 is stopped. If the T312 expires and the security has not been activated, then the UE enters into the RRC idle state; or otherwise, if the T312 expires and the security has been activated, then the RRC connection re-establishment procedure is initiated. More specifically, the T312 is started when one of the following conditions is met:
Condition 1, for a measurement ID, if a trigger type is set to "event," and all measurements of one or a plurality of applicable cells having been filtered by a layer 3 have met, within a time period timetoTrigger, an entry condition applied to the event, and a measurement report list VarMeasReportList stored in the UE does not include any measurement report item for the measurement ID, and if the UE supports the T312 and the configuration for the event includes a configuration (an information element useT312) indicating that the T312 is available, and if the T310 is running, and if the T312 is not running, then the T312 is started.
Condition 2, for a measurement ID, if a trigger type is set to "event," and all measurements of one or a plurality of applicable cells not included in a triggered cell list cellsTriggeredList having been filtered by the layer 3 have met, within the time period timetoTrigger, an entry condition applied to the event, and if the UE supports the T312 and the configuration for the event includes a configuration (the information element useT312) indicating that the T312 is available, and if the T310 is running, and if the T312 is not running, then the T312 is started.
Condition 3, for a measurement ID, if a trigger type is set to "event," and all measurements of one or a plurality of applicable cells included in the triggered cell list cellsTriggeredList having been filtered by the layer 3 have met, within the time period timetoTrigger, a leaving condition applied to the event, and if the UE supports the T312 and the configuration for the event includes a configuration (the information element useT312) indicating that the T312 is available, and if the T310 is running, and if the T312 is not running, then the T312 is started.

It should be noted that the present disclosure does not limit a starting scenario of the above T312. For example, the T312 may also be started when the measurement report for a measurement ID has been successfully transmitted to the base station. However, when an RLF occurs subsequently and the T310 is therefore started, if the measurement ID is configured with the T312, then the T312 is started.

Some new mechanisms with respect to the LTE system have been introduced or are to be introduced to the NR system. For example, a beam technology using high-frequency resources is widely used in NR systems, and different reference signals and the like are configured to implement the beam technology. For example, in a fast master cell group (MCG) link recovery mechanism in dual connectivity (DC), a configured secondary cell group (SCG) link is used to perform fast recovery for a master cell group link (a signaling radio bearer 1 (SRB1)) and the RRC connection. The following embodiments of the present disclosure provide, mainly with respect to some new mechanisms introduced in NR, a timer T312 management method used for fast handover failure recovery.

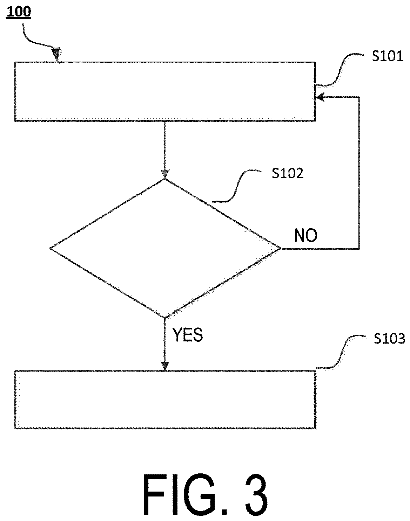

The control method for user equipment (UE) in the present disclosure is described below. Specifically, a management method for a timer used to implement fast handover failure recovery technology is described. As an example, FIG. 3 shows a flowchart of a control method 100 for user equipment (UE) according to an embodiment of the present disclosure.

In step S101, the user equipment (UE) receives an RRC reconfiguration message from a base station. Regarding the RRC reconfiguration message, for example, when a source base station considers that a handover needs to be performed for the user equipment (UE), the source base station selects a target base station to initiate a handover preparation procedure. After completion of the handover preparation procedure, the target base station generates RRC reconfiguration messages including in-synchronization reconfiguration Reconfigurationwithsync or mobility control information MobilityControlInformation, and delivers the same to the UE through the source base station.

In step S102, whether the received RRC reconfiguration message includes radio link monitoring configuration information is determined.

The above radio link monitoring configuration information may be an information element rlf-TimerAndConstants, or may be information about reconfiguration of a reference signal(s) for radio link monitoring (RLM).

When it is determined in step S102 that the received RRC reconfiguration message includes the radio link monitoring configuration information, step S103 is performed. In step S103, if a fast handover failure recovery timer is running, then the fast handover failure recovery timer is stopped.

When it is determined in step S102 that the received RRC reconfiguration message does not include the radio link monitoring configuration information, step S101 is performed again.

The above fast handover failure recovery timer may be, for example, a timer T312 in a technical specification protocol. The timer T312 may be a timer associated with a measurement configuration corresponding to a cell group. The above cell group may include a master cell group (MCG) and a secondary cell group (SCG).

As described above, for example, when the radio link monitoring configuration information is an information element rlf-TimerAndConstants, and if the information element rlf-TimerAndConstants is set to "release," then the configuration of the fast handover failure recovery timer (such as the timer T312) is released. On the other hand, if the received information element rlf-TimerAndConstants is not set to "release," the configuration (such as the configuration of an information element useT312) of the fast handover failure recovery timer (such as the timer T312) is reconfigured according to the received configuration content.

As described above, when the above radio link monitoring configuration information is information about reconfiguration of a reference signal(s) for radio link monitoring (RLM), the user equipment (UE) reconfigures, on the basis of the received information, a reference signal(s) used for radio link monitoring.

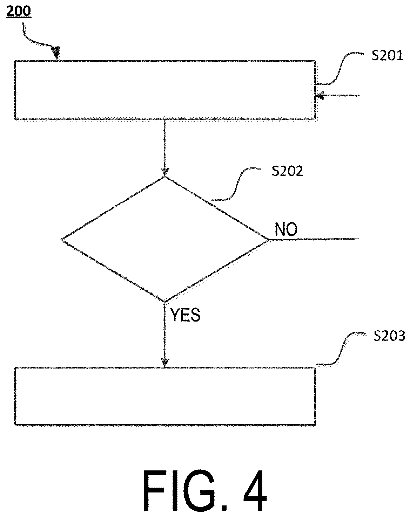

Another control method for user equipment (UE) in the present disclosure is described below. Specifically, another management method for a timer used to implement a fast handover failure recovery technology is described. As an example, FIG. 4 shows a flowchart of a control method 200 for user equipment (UE) according to an embodiment of the present disclosure.

In step S201, the user equipment (UE) and a base station are caused to communicate with each other through dual connectivity (DC) based on a master cell group (MCG) and a secondary cell group (SCG).

In step S202, the user equipment (UE) determines whether an MCG failure occurs. If it is determined in step S202 that an MCG failure occurs, then step S203 is performed. In step S203, if a fast handover failure recovery timer is running, then the fast handover failure recovery timer is stopped.

If it is determined in step S202 that no MCG failure occurs, step S201 is performed again to continue communication with the base station.

The above MCG failure may be, for example, as follows: a radio link failure (RLF) occurs in the MCG; an RRC configuration of the MCG fails (for example, an RRC reconfiguration fails); integrity monitoring of the MCG fails; a maximum uplink transmission timing difference is exceeded, etc.

The running fast handover failure recovery timer may be stopped when an MCG failure is detected, or the running fast handover failure recovery timer may be stopped when a procedure for transmitting an MCG failure information message is initiated.

The above fast handover failure recovery timer may be, for example, a timer T312 in a technical specification protocol.

Specific embodiments of the present disclosure are described in detail below. In addition, as described above, the embodiments of the present disclosure are exemplary descriptions for facilitating understanding of the present invention, and are not intended to limit the present invention.

### Embodiment 1

This embodiment provides a management method for a timer T312. This embodiment avoids an unnecessary RRC connection re-establishment procedure and subsequent service interruption due to inappropriate expiry of the T312. The above management method includes the following steps:
Step 1, UE receives an RRC reconfiguration message from a base station.
Step 2, if the RRC reconfiguration message includes an information element rlf-TimerAndConstants, then the UE performs one or a plurality of the following operations to configure an RLF-related timer and constant corresponding to the cell group:
   if the received information element rlf-TimerAndConstants is set to "release,"
   ➢ if a T312 is running, then stop the T312;
   ➢ release a configuration of the T312, that is, a value of the T312 and/or an indication configuration (a configuration of an information element useT312) indicating whether one or a plurality of measurement IDs can use the T312 are released;
   otherwise, that is, if the received information element rlf-TimerAndConstants is not set to "release,"
   ➢ if a T312 is running, then stop the T312;
   ➢ reconfigure the T312 in accordance with the received configuration content, that is, the value of the T312 and/or the indication configuration (the configuration of the information element useT312) indicating whether one or a plurality of measurement IDs can use the T312 are reconfigured.

The information element rlf-TimerAndConstants is used to configure, for a cell group, timers and constants used for detecting and triggering a cell-level radio link failure.

The above measurement ID may also refer to a measurement report configuration reportconfig corresponding to the measurement ID or a report configuration ID ReportConfigId corresponding to the measurement report configuration. Alternatively, the above measurement ID may also refer to a measurement object configuration corresponding to the measurement ID or a measurement object ID MeasObj ectId corresponding to the measurement object configuration.

The above T312 may refer to a T312 associated with a measurement configuration corresponding to or associated with the cell group, and may also refer to a T312 associated with the measurement configuration corresponding to the cell group including an MCG and an SCG.

Preferably, the information element rlf-TimerAndConstants is included in an information element SpCellConfig. The information element SpCellConfig is used to configure parameters, such as serving cell-specific media access control layer parameters and physical layer parameters, for a special cell SpCell of a cell group (the MCG or the SCG) of the UE. In dual connectivity (DC) configuration, the SpCell refers to a primary cell of the MCG or a primary secondary cell PSCell of the SCG. Otherwise, in a scenario in which the DC is not configured, the SpCell refers to a primary cell PCell. A SpCell supports physical uplink control channel (PUCCH) transmission and contention-based random access, and is always in an active state.

### Embodiment 2

This embodiment provides a management method for a timer T312, according to the invention. This embodiment avoids an unnecessary RRC connection re-establishment procedure and subsequent service interruption due to inappropriate expiry of the T312. The above management method includes the following steps:
Step 1, UE receives an RRC reconfiguration message from a base station.
Step 2, if the RRC reconfiguration message includes reconfiguration information of any reference signal(s) used for radio link monitoring (RLM), if a T312 is running, then the UE stops the T312.

According to the invention, the reference signal configuration information used for RLM is included in an information element spCellConfigDedicated in an information element SpCellConfig. In this case, step 2 can be further described as follows: if the information element SpCellConfig in the RRC reconfiguration message includes the information element spCellConfigDedicated, and if any reference signal(s) used for RLM are reconfigured in the received information element spCellConfigDedicated, and if a T312 is running, then stop the T312 . The information element SpCellConfig is used to configure parameters, such as serving cell-specific media access control layer parameters and physical layer parameters, of a special cell SpCell of a cell group (an MCG or an SCG) of the UE. The information element spCellConfigDedicated is relative to common spCell configuration information, and is used to configure serving cell-dedicated parameters for a special cell of a cell group (the MCG or the SCG). The configuration is mostly UE-dedicated configuration, such as a bandwidth part configuration, uplink configuration, timing advance group ID, etc.

In dual connectivity (DC) configuration, the SpCell refers to a primary cell of the MCG or a primary secondary cell PSCell of the SCG. Otherwise, in a scenario in which the DC is not configured, the SpCell refers to a primary cell PCell. A SpCell supports physical uplink control channel (PUCCH) transmission and contention-based random access, and is always in an active state.

Preferably, the above T312 may refer to a T312 associated with a measurement configuration corresponding to or associated with the cell group. Alternatively, the above T312 may also refer to a T312 associated with the measurement configuration corresponding to the cell group including the MCG and the SCG.

The statement "used for RLM" can also be described as used for detecting a beam failure or detecting a cell radio link failure.

### Embodiment 3

This embodiment provides a management method for a timer T312. This embodiment avoids an unnecessary RRC connection re-establishment procedure and subsequent service interruption due to inappropriate expiry of the T312.

In this embodiment, UE performs the following operations:
Step 1, stop a timer T310.
Step 2, stop a timer T312.

This embodiment is used to achieve that the UE stops the function of the T312 when the T310 is stopped. In the other words, if the T310 is stopped, then the T312 is stopped.

### Embodiment 4

This embodiment provides a management method for a T312. Preferably, the method can be applied to a DC scenario. The DC may refer to various combinations in which a primary base station is LTE or NR and a secondary base station is LTE or NR (such as NE-DC in which the primary base station is NR and the secondary base station is LTE). This embodiment avoids an unnecessary RRC connection re-establishment procedure and subsequent service interruption due to inappropriate expiry of the T312.

When UE detects an RLF used for an MCG, the T312 is stopped.

Preferably, the above UE operation is performed when the UE activates or configures fast MCG failure recovery (or referred to as an MCG failure information report procedure or a configuration related to the MCG failure information report procedure).

### Embodiment 5

This embodiment provides a management method for a T312. Preferably, the method can be applied to a DC scenario. The DC may refer to various combinations in which a primary base station is LTE or NR and a secondary base station is LTE or NR (such as NE-DC in which the primary base station is NR and the secondary base station is LTE). This embodiment avoids an unnecessary RRC connection re-establishment procedure and subsequent service interruption due to inappropriate expiry of the T312.

When UE initiates a procedure for transmitting an MCG failure information message, the T312 is stopped.

The procedure for transmitting the MCG failure information message can be briefly referred to as an MCG failure information messaging procedure, and is used to inform a network side that the UE encounters an MCG failure. The MCG failure may refer to the following: an MCG RLF occurs; an RRC configuration of the MCG fails (for example, an RRC reconfiguration fails); integrity monitoring of the MCG fails; a maximum uplink transmission timing difference is exceeded. Preferably, the MCG failure information messaging procedure is used to report the MCG failure to a base station when the MCG is not suspended.

Preferably, the above UE operation is performed when the UE activates or configures fast MCG failure recovery (or referred to as an MCG failure information report procedure or a configuration related to the MCG failure information report procedure).

### Embodiment 6

This embodiment provides a management method for a T312 in a DC scenario. The DC may refer to various combinations in which a primary base station is LTE or NR and a secondary base station is LTE or NR (such as NE-DC in which the primary base station is NR and the secondary base station is LTE).

In this embodiment, UE starts the T312 when one or a plurality of the following conditions are met.

Condition 1, for a measurement ID, if a trigger type is set to "event," and all measurements of one or a plurality of applicable cells having been filtered by a layer 3 have met, within a time period timetoTrigger, an entry condition applied to the event, and if a measurement report list VarMeasReportList stored in the UE does not include any measurement report item for the measurement ID, and if the UE supports the T312 and the configuration for the event includes a configuration (an information element useT312) indicating that the T312 is available, and if the T310 is running, and if an SCG is not configured or one or a plurality of T313s are running and the T312 is not running, then the T312 is started.

Condition 2, for a measurement ID, if a trigger type is set to "event," and all measurements of one or a plurality of applicable cells not included in a triggered cell list cellsTriggeredList having been filtered by the layer 3 have met, within the time period timetoTrigger, an entry condition applied to the event, and if the UE supports the T312 and the configuration for the event includes a configuration (the information element useT312) indicating that the T312 is available, and if the T310 is running, and if an SCG is not configured or one or a plurality of T313s are running and the T312 is not running, then the T312 is started.

Condition 3, for a measurement ID, if a trigger type is set to "event," and all measurements of one or a plurality of applicable cells included in a triggered cell list cellsTriggeredList having been filtered by the layer 3 have met, within the time period timetoTrigger, a leaving condition applied to the event, and if the UE supports the T312 and the configuration for the event includes a configuration (the information element useT312) indicating that the T312 is available, and if the T310 is running, and if an SCG is not configured or one or a plurality of T313s are running and the T312 is not running, then the T312 is started.

The above T310 refers to a timer used for MCG radio link failure detection, and the T313 refers to a timer used for SCG radio link failure detection. The use of the T313 distinct from the T310 in the present disclosure is for ease of description. However, considering that all timers used for MCG or SCG radio link failure detection are referred to as a T310 in current NR technical specification documents (such as 38.331), in this case, the above T310 is further described as a T310 used for the MCG, and the T313 is described as a T310 used for the SCG for distinction.

Preferably, the above UE operation is performed when the UE activates or configures fast MCG failure recovery (or referred to as an MCG failure information report procedure or a configuration related to the MCG failure information report procedure).

The above embodiments 4, 5, and 6 are applied to a scenario in which fast MCG failure recovery is configured. The fast MCG failure recovery refers to that in the DC scenario, if an MCG failure occurs (and if the MCG is not suspended), then the UE does not trigger an RRC connection re-establishment procedure to recover connection to the network side, and instead, the UE reports the MCG failure to the network side through an SRB of an SCG link. The procedure in which the UE side reports the MCG failure to the network side is the above MCG failure information messaging procedure. A secondary base station of the SCG delivers the received MCG failure information to a primary base station of the MCG, so that the primary base station determines how to recover the RRC connection. For example, an RRC reconfiguration message is transmitted to the UE to reconfigure a relevant RRC parameter, or a handover command is transmitted to the UE to initiate a handover procedure. Alternatively, if an MCG failure occurs and the MCG has been suspended, then the UE still triggers the RRC connection re-establishment procedure to recover the connection to the network side. Alternatively, if an MCG failure occurs and the MCG has been suspended for longer than a time period, or if the UE has transmitted the MCG failure information message to the SCG for longer than a time period, and if the MCG failure has not recovered during this time period (such as a radio connection recovery triggered by not receiving N311 consecutive in-sync indications from a lower layer), then the UE still triggers the RRC connection re-establishment procedure to recover the connection to the network side. The time period may be pre-defined, or may be configured through the base station.

### Embodiment 7

This embodiment provides a management method for a T312. This method can implement fast handover failure recovery after a measurement report has been reported to a network side, so that a service interruption time period caused by T310-based link failure monitoring is reduced. The management method includes the following steps:
Step 1, UE detects a physical layer problem in an RRC connected state, that is, N310 consecutive out-of-sync indications are received from a lower layer.
Step 2, if a measurement report is transmitted within a past time period (denoted as T) for a measurement ID configured to use a T312, then start the T312. The value of the T may be predefined such as n milliseconds, or may be configured by a base station.

### Embodiment 8

This embodiment provides a management method for a T312. This method can implement fast handover failure recovery after a measurement report has been reported to a network side, so that a service interruption time period caused by T310-based link failure monitoring is reduced. The management method includes the following steps:
Step 1, UE starts a T310.
Step 2, if a measurement report is transmitted within a past time period (denoted as T) for a measurement ID configured to use a T312, then start the T312. The value of the T may be predefined such as n milliseconds, or may be configured by a base station.

### Embodiment 9

This embodiment provides a management method for a T312. This method can stop the T312 in the above conditions, so that an RRC connection re-establishment caused by inappropriate expiry of the T312 is avoided. The management method includes the following steps:
Step 1, UE receives an RRC reconfiguration message.
Step 2, if the RRC connection reconfiguration message includes a reconfiguration of a T312 configured for one or a plurality of measurement objects in a measurement configuration, then the UE performs one or a plurality of the following operations:
   ➢ For one or a plurality of associated measurement objects, if a T312 is running, then stop the T312.
   ➢ reconfigure the T312 in accordance with the received configuration content, that is, the value of the T312 and/or the indication configuration (the configuration of the information element useT312) indicating whether one or a plurality of measurement IDs can use the T312 are reconfigured.

The one or a plurality of measurement objects can also be replaced with one or a plurality of measurement IDs.

It should be noted that the present disclosure uses the name of the timer T312 used in the fast handover failure recovery mechanism in the LTE system. However, the present disclosure does not limit the name of the timer, and the timer can also be named as, for example, Txxx and the like.

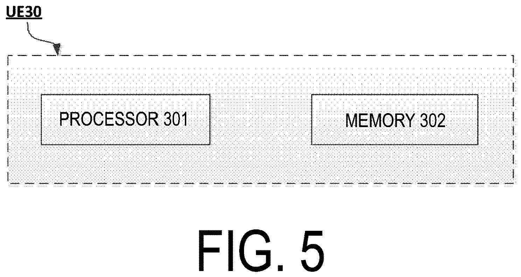

FIG. 5 shows a block diagram of user equipment 30 according to an embodiment of the present disclosure. As shown in FIG. 5, the user equipment 30 includes a processor 301 and a memory 302. The processor 301 may include, for example, a microprocessor, a microcontroller, an embedded processor and so on. The memory 302 may include, for example, a volatile memory (for example, a random access memory (RAM)), a hard disk drive (HDD), a non-volatile memory (for example, a flash memory), or other memory systems. Program instructions are stored on the memory 302. When executed by the processor 301, the instructions can perform the aforementioned control method in the user equipment as described in detail in the present disclosure.

In the present application, the term "base station" refers to a mobile communication data and control switching center with a larger transmit power and a wider coverage area, and has functions of resource distribution scheduling, data receiving and transmitting, and the like. The term "user equipment" refers to a user mobile terminal, for example, a terminal device capable of performing wireless communication with a base station or a micro base station, including a mobile phone, a notebook computer and the like.

The methods and related devices according to the present disclosure have been described above in conjunction with preferred embodiments. It should be understood by those skilled in the art that some methods shown above are only exemplary. The method according to the present disclosure is not limited to steps or sequences shown above. The base station and user equipment shown above may include more modules. For example, the base station and user equipment may further include modules that may be developed or will be developed in the future to be applied to a base station, an MME, or UE. Various identifiers shown above are only exemplary, not for limitation, and the present disclosure is not limited to specific information elements serving as examples of these identifiers. Those skilled in the art can make various alterations and modifications according to the teachings of the illustrated embodiments.

Various features or functional modules of the device used in the foregoing embodiments may be implemented or executed by circuits (e.g., monolithic or multi-chip integrated circuits). Circuits designed to execute the functions described in this description may include general-purpose processors, Digital Signal Processors (DSPs), Application Specific Integrated Circuits (ASICs), Field Programmable Gate Arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of the advances in semiconductor technology, one or a plurality of embodiments of the present disclosure may also be implemented using these new integrated circuit technologies.

The embodiments of the present disclosure have been described in detail above with reference to the accompanying drawings. However, embodiments resulted from the appropriate combinations of the technical means disclosed in different embodiments are also included within the scope of the invention, provided that they fall within the scope of the appended claims.

## Claims

1. A User Equipment, UE (30) comprising:
a processor (301); and
a memory (302) in electronic communication with the processor (301), wherein instructions stored in the memory (302), when executed by the processor (301), cause the UE (30) to:
receive a first RRC reconfiguration message including a first information element (IE), the first IE being an information element SpCellConfig;
start a timer T312, responsive to conditions that (i) a measurement report for a measurement identity for which the timer T312 has been configured is triggered and (ii) a timer T310 is running, the timer T312 being associated with a measurement configuration corresponding to a cell group;
stop the timer T312, responsive to conditions that (i) the timer T312 is running, (ii) the first IE includes an information element spCellConfigDedicated, and (iii) any of the reference signal(s) that are used for radio link monitoring are reconfigured by the information element spCellConfigDedicated; and
use the first IE to configure parameters for a special cell of the cell group, the cell group being either a master cell group, MCG or a secondary cell group, SCG.

2. The UE (30) according to claim 1, wherein the instructions stored in the memory (302), when executed by the processor (301), further cause the UE (30) to:
receive a second RRC reconfiguration message including a second information element, IE, the second IE being an information element rlf-TimerAndConstants;
stop the timer T312 for a corresponding cell group, responsive to conditions that (i) the second IE is not set to "release" and (ii) the timer T312 for the corresponding cell group is running; and
use the second IE to configure timers and constants for detecting and triggering a cell-level radio link failure, the cell group being either the MCG or the SCG.

3. The UE (30) according to claim 1, wherein the instructions stored in the memory (302), when executed by the processor (301), further cause the UE (30) to:
stop the timer T312 upon initiation of an MCG failure information procedure that is used to inform a network that the UE (30) encounters an MCG failure.

4. A method performed by a User Equipment, UE (30), the method comprising:
receiving a first RRC reconfiguration message including a first information element, IE, the first IE being an information element SpCellConfig;
starting a timer T312, responsive to conditions that (i) a measurement report for a measurement identity for which the timer T312 has been configured is triggered and (ii) a timer T310 is running, the timer T312 being associated with a measurement configuration corresponding to a cell group;
stopping the timer T312, responsive to conditions that (i) the timer T312 is running, (ii) the first IE includes an information element spCellConfigDedicated, and (iii) any of the reference signal(s) that are used for radio link monitoring are reconfigured by the information element spCellConfigDedicated; and
using the first IE to configure parameters for a special cell of the cell group, the cell group being either a master cell group, MCG or a secondary cell group, SCG.

## Patentansprüche

1. Nutzergerät, UE (30), aufweisend:
einen Prozessor (301); und
einen Speicher (302) in elektronischer Verbindung mit dem Prozessor (301), wobei im Speicher (302) gespeicherte Anweisungen, wenn sie vom Prozessor (301) ausgeführt werden, das UE (30) veranlassen:
eine erste RRC-Neukonfigurationsnachricht zu empfangen, die ein erstes Informationselement (IE) enthält, wobei das erste IE ein Informationselement SpCellConfig ist;
einen Zeitgeber T312 zu starten, als Reaktion auf Bedingungen, dass (i) ein Messbericht für eine Messidentität, für die der Zeitgeber T312 konfiguriert worden ist, ausgelöst wird und (ii) ein Zeitgeber T310 läuft, wobei der Zeitgeber T312 mit einer Messkonfiguration entsprechend einer Zellengruppe assoziiert ist;
den Zeitgeber T312 zu stoppen, als Reaktion auf Bedingungen, dass (i) der Zeitgeber T312 läuft, (ii) das erste IE ein Informationselement spCellConfigDedicated enthält und (iii) ein (eines der) Referenzsignal (Referenzsignale), das (die) für eine Funkverbindungsüberwachung verwendet wird (werden), durch das Informationselement spCellConfigDedicated neukonfiguriert wird; und
das erste IE zu verwenden, um Parameter für eine spezielle Zelle der Zellengruppe zu konfigurieren, wobei die Zellengruppe entweder eine Master-Zellengruppe, MCG, oder eine Sekundärzellengruppe, SCG, ist.

2. UE (30) nach Anspruch 1, wobei die im Speicher (302) gespeicherten Anweisungen, wenn sie vom Prozessor (301) ausgeführt werden, ferner das UE (30) veranlassen:
eine zweite RRC-Neukonfigurationsnachricht zu empfangen, die ein zweites Informationselement, IE, enthält, wobei das zweite IE ein Informationselement rlf-TimerAndConstants ist;
den Zeitgeber T312 für eine entsprechende Zellengruppe zu stoppen, als Reaktion auf Bedingungen, dass (i) das zweite IE nicht auf "release" gesetzt ist und (ii) der Zeitgeber T312 für die entsprechende Zellengruppe läuft; und
das zweite IE zu verwenden, um Zeitgeber und Konstanten zum Detektieren und Auslösen einer Funkverbindungsstörung auf Zellenebene zu konfigurieren, wobei die Zellengruppe entweder die MCG oder die SCG ist.

3. UE (30) nach Anspruch 1, wobei die im Speicher (302) gespeicherten Anweisungen, wenn sie vom Prozessor (301) ausgeführt werden, das UE (30) veranlassen:
den Zeitgeber T312 auf eine Einleitung einer MCG-Störungsinformationsprozedur hin zu stoppen, die verwendet wird, um ein Netzwerk darüber zu informieren, dass das UE (30) eine MCG-Störung aufweist.

4. Verfahren, das von einem Nutzergerät, UE (30), durchgeführt wird, wobei das Verfahren aufweist:
Empfangen einer ersten RRC-Neukonfigurationsnachricht, die ein erstes Informationselement, IE, enthält, wobei das erste IE ein Informationselement SpCellConfig ist;
Starten eines Zeitgebers T312, als Reaktion auf Bedingungen, dass (i) ein Messbericht für eine Messidentität, für die der Zeitgeber T312 konfiguriert worden ist, ausgelöst wird und (ii) ein Zeitgeber T310 läuft, wobei der Zeitgeber T312 mit einer Messkonfiguration entsprechend einer Zellengruppe assoziiert ist;
Stoppen des Zeitgebers T312, als Reaktion auf Bedingungen, dass (i) der Zeitgeber T312 läuft, (ii) das erste IE ein Informationselement spCellConfigDedicated enthält und (iii) ein (eines der) Referenzsignal (Referenzsignale), das (die) für eine Funkverbindungsüberwachung verwendet wird (werden), durch das Informationselement spCellConfigDedicated neukonfiguriert wird; und
Verwenden des ersten IE, um Parameter für eine spezielle Zelle der Zellengruppe zu konfigurieren, wobei die Zellengruppe entweder eine Master-Zellengruppe, MCG, oder eine Sekundärzellengruppe, SCG, ist.

## Revendications

1. Équipement utilisateur, UE (30), comprenant :
un processeur (301) ; et
une mémoire (302) en communication électronique avec le processeur (301), dans lequel des instructions stockées dans la mémoire (302), quand elles sont exécutées par le processeur (301), amènent l'UE (30) à :
recevoir un premier message de reconfiguration RRC comprenant un premier élément d'information (IE), le premier IE étant un élément d'information SpCellConfig ;
démarrer un temporisateur T312, en réponse à des conditions (i) qu'un rapport de mesure pour une identité de mesure pour laquelle le temporisateur T312 a été configuré est déclenché et (ii) qu'un temporisateur T310 est en marche, le temporisateur T312 étant associé à une configuration de mesure correspondant à un groupe de cellules ;
arrêter le temporisateur T312, en réponse à des conditions que (i) le temporisateur T312 est en marche, (ii) le premier IE comprend un élément d'information spCellConfigDedicated, et (iii) n'importe lesquels du ou des signaux de référence qui sont utilisés pour une surveillance de liaison radio sont reconfigurés par l'élément d'information spCellConfigDedicated ; et
utiliser le premier IE pour configurer des paramètres pour une cellule spéciale du groupe de cellules, le groupe de cellules étant soit un groupe de cellules primaires, MCG, soit un groupe de cellules secondaires, SCG.

2. UE (30) selon la revendication 1, dans lequel les instructions stockées dans la mémoire (302), quand elles sont exécutées par le processeur (301), amènent en outre l'UE (30) à :
recevoir un second message de reconfiguration RRC comprenant un second élément d'information, IE, le second IE étant un élément d'information rlf-TimerAndConstants ;
arrêter le temporisateur T312 pour un groupe de cellules correspondant, en réponse à des conditions que (i) le second IE n'est pas établi à « libérer », et (ii) le temporisateur T312 pour le groupe de cellules correspondant est en marche ; et
utiliser le second IE pour configurer des temporisateurs et des constantes pour la détection et le déclenchement d'une défaillance de liaison radio à un niveau de cellule, le groupe de cellules étant soit le MCG soit le SCG.

3. UE (30) selon la revendication 1, dans lequel les instructions stockées dans la mémoire (302), quand elles sont exécutées par le processeur (301), amènent en outre l'UE (30) à :
arrêter le temporisateur T312 lors du lancement d'une procédure d'information de défaillance de MCG qui est utilisée pour informer un réseau que l'UE (30) fait face à une défaillance de MCG.

4. Procédé réalisé par un équipement utilisateur, UE (30), le procédé comprenant :
la réception d'un premier message de reconfiguration RRC comprenant un premier élément d'information (IE), le premier IE étant un élément d'information SpCellConfig ;
le démarrage d'un temporisateur T312, en réponse à des conditions (i) qu'un rapport de mesure pour une identité de mesure pour laquelle le temporisateur T312 a été configuré est déclenché et (ii) qu'un temporisateur T310 est en marche, le temporisateur T312 étant associé à une configuration de mesure correspondant à un groupe de cellules ;
l'arrêt du temporisateur T312, en réponse à des conditions que (i) le temporisateur T312 est en marche, (ii) le premier IE comprend un élément d'information spCellConfigDedicated, et (iii) n'importe lesquels du ou des signaux de référence qui sont utilisés pour une surveillance de liaison radio sont reconfigurés par l'élément d'information spCellConfigDedicated ; et
l'utilisation du premier IE pour configurer des paramètres pour une cellule spéciale du groupe de cellules, le groupe de cellules étant soit un groupe de cellules primaires, MCG, soit un groupe de cellules secondaires, SCG.
